# EUROPÄISCHE PATENTANMELDUNG

(11) **EP 0 945 172 A1**
(43) Veröffentlichungstag der Anmeldung: **29.09.1999**
(21) Anmeldenummer: 99105783.7
(22) Anmeldetag: 22.03.1999
(51) Int. Cl.: B01J 2/04, B01J 2/14, C02F 11/12

(54) **Zerkleinerungs- und Zuteilungsvorrichtung für zerstückelbare, pumpbare Stoffe**

(30) Priorität: 26.03.1998 DE 19813485
(71) Anmelder: SEP GESELLSCHAFT FÜR TECHNISCHE STUDIEN ENTWICKLUNG PLANUNG mbH, D-85737 Ismaning (DE)
(72) Erfinder: Killer, Anton, 83623 Dietramszell (DE)
(74) Vertreter: R.A. KUHNEN & P.A. WACKER

(57) **Zusammenfassung**

Durch die erfindungsgemäße Zerkleinerungs- und Zuteilungsvorrichtung können zerstückelbare, pumpbare Stoffe, insbesondere mechanisch entwässerter Klärschlamm in etwa gleich große Stücke zerteilt und in regelbarer Menge einer nachfolgenden Vorrichtung, z.B. einem Trockner zugeführt werden. Dazu wird der Schlamm durch einen Spalt (4) gefördert, der von zwei gegeneinander drehbaren Teilen gebildet wird, wobei in bevorzugten Ausführungsformen der erfindungsgemäßen Vorrichtung beide Teile auf der dem Spalt zugewandten Seite Vertiefungen (5) aufweisen, die derart gestaltet sind, daß bei Drehung der beiden Teile gegeneinander im vorgegebenen Drehsinn Schlammstränge mit periodisch abwechselnden Bereichen mit kleineren und größeren Querschnitten gebildet, nach außen transportiert und beim Austritt an Stellen, die kleinere Querschnitte aufweisen, durchtrennt werden.

## Beschreibung

Die Erfindung betrifft eine Zerkleinerungs- und Zuteilungsvorrichtung für zerstückelbare, pumpbare Stoffe, insbesondere mechanisch entwässerten Klärschlamm Mechanisch entwässerter Klärschlamm enthält Fremdkörper wie metallische Partikel, kleine Steine, Haare und Teile aus Kunststoff, die besondere Anforderungen an Zerkleinerungs- und Zuteilungsvorrichtungen stellen. Derartige Fremdkörper, auch Haare, sind auch in ausgefaultem Klärschlamm enthalten.

Derartige Zerkleinerungs- und Zuteilungsvorrichtungen sind aus den Schritten WO 86/07049 und DE 2356039 bekannt. Nach der Lehre der WO 86/07049 wird ein bis zur pastösen Konsistenz entwässerter Klärschlamm mit Hilfe einer Förderschnecke durch eine Lochmatrize gepreßt. Es entstehen dabei würstchenförmige Partikel, die einem Bandtrockner zugeführt werden. Aus der DE 2356039 ist eine Schlammzuteil- und -dosiervorrichtung für Verbrennungsöfen mit Rostfeuerung bekannt, bei der ein auf einen Wassergehalt von 75-85 % vorentwässerter Schlamm nach dem Austritt aus der Zuteil- und Dosiervorrichtung durch eine mit Messerklingen, Schlagleisten oder Schneiddrahten bestückte Abschneidevorrichtung kleinstückig zerteilt wird.

Beide Vorrichtungen weisen gravierende Nachteile auf. Bei einer Förderung des Klärschlamms durch eine Lochmatrize, wie es die WO 86/07049 lehrt, besteht die Gefahr der Verstopfung einzelner Löcher aufgrund der im Klärschlamm enthaltenen Fremdkörper wie z.B. Haare, Kunststoffteile oder Holzstückchen. Dies ist auch dann der Fall, wenn der Klärschlamm durch ein Sieb gepreßt und von Fremdkörpern befreit wurde, deren Abmessungen größer als der Durchmesser der Löcher der Lochmatrize sind. Insbesondere Haare werden häufig mit dem einen Ende durch ein anderes Loch der Lochmatrize gedrückt als mit dem anderen Ende. Dies führt zu einer Querschnittsverengung und anschließend zu einer Verstopfung der Löcher mit der Folge, daß derartige Lochmatrizen häufig gereinigt werden müssen. Zur Vermeidung derartiger Verstopfungen ist nach der WO 86/07049 als Preßorgan eine Klappe vorgesehen, deren Fläche der halben Grundfläche der Lochmatrize entspricht und die um eine die Grundfläche der Matrize mittig halbierende Achse schwenkbar ist. Durch eine derartige Klappe kann zwar sichergestellt werden, daß nicht alle Löcher in den durch die Klappe abdeckbaren Matrizenhälften verstopfen. es kann aber nicht sichergestellt werden, daß alle Löcher offen bleiben. Und bei einer der Lehre der DE 2356039 entsprechenden Abschneidevorrichtung besteht die Gefahr, daß die Messerklingen, Schlagleisten oder Schneiddrähte auf harte, im Schlamm enthaltene Steinstücke oder Metallteile auftreffen, was Beschädigungen bzw. einen schnellen Verschleiß der Abschneidevorrichtung zur Folge hat.

Es ist daher Aufgabe der Erfindung, eine Zerkleinerungs- und Zuteilungsvorrichtung für zerstückelbare, pumpbare Stoffe, insbesonders mechanisch entwässerten Klärschlamm, anzugeben, mit der etwa gleich große Stücke hergestellt und in regelbarer Menge einer nachfolgenden Vorrichtung z.B. einen Trockner zugeführt werden können, wobei die erwähnten Nachteile der bekannten Zerkleinerungs- und Zuteilvorrichtungen nicht auftreten.

Die Erfindungsaufgabe wird durch die im Hauptanspruch angegebenen konstruktiven Merkmale der Zerkleinerungs- und Zuteilungsvorrichtung gelöst.

Im folgenden wird die Zerkleinerung und Zuteilung von mechanisch vorentwässertem Klärschlamm mit Hilfe der erfindungsgemäßen Vorrichtung beschrieben.

Es zeigen
- Fig. 1: eine Gesamtdarstellung der Zerkleinerungs- und Zuteilungs vorrichtung,
- Fig. 2: eine Gesamtdarstellung einer anderen Ausführungsform der Zerkleinerungs- und Zerteilungsvorrichtung,
- Fig. 3: einen Teil der erfindungsgemäßen Vorrichtung zur Verdeutlichung des Transportes und der Zerkleinerung des Klärschlammes,
- Fig. 4: eine andere Ausführungsform des in Fig. 3 dargestellten Teiles.

Ausgefaulter und nichtausgefaulter Klärschlamm werden üblicherweise vor der Durchführung weiterer Behandlungsschritte mit Hilfe von Zentrifugen, Bandfilter-, Kammerfilterpressen oder ähnlichen Vorrichtungen möglichst weitgehend mechanisch entwässert. In der Regel werden je nach Schlammbeschaffenheit und verwendeten Entwässerungsvorrichtungen Trockensubstanzgehalte zwischen ca. 15-30 % erreicht.

In diesem Bereich ist der Schlamm sowohl förderbar, z.B. mit einer Förderschnecke oder Dickstoffpumpe, als auch zerstückelbar.

Um Schäden an der erfindungsgemäßen Zerkleinerungs- und Zuteilungsvorrichtung durch größere, im Schlamm enthaltene, harte Fremdstoffe zu vermeiden, ist es zweckmäßig, dafür zu sorgen, daß derartige Fremdstoffe nicht in die erfindungsgemäße Zerkleinerungs- und Zuteilungsvorrichtung gelangen können. Dies ist z.B. dadurch möglich, daß der Schlamm durch ein Sieb entsprechender Maschenweite gepreßt wird, bevor er zur Zerkleinerungs- und Zuteilungsvorrichtung gelangt.

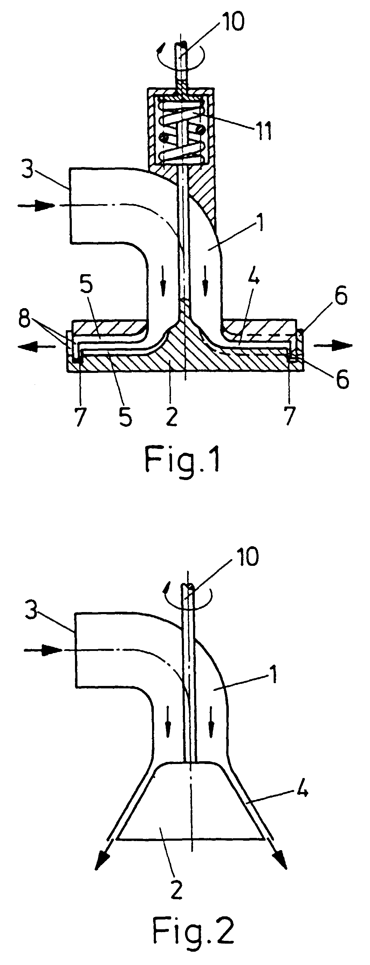

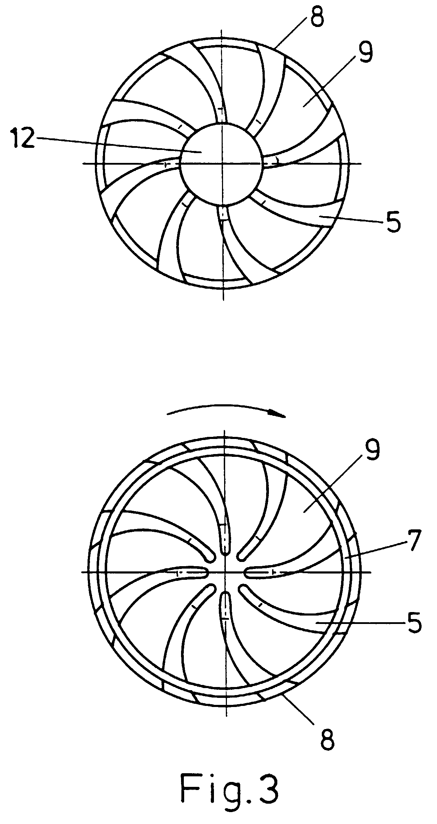

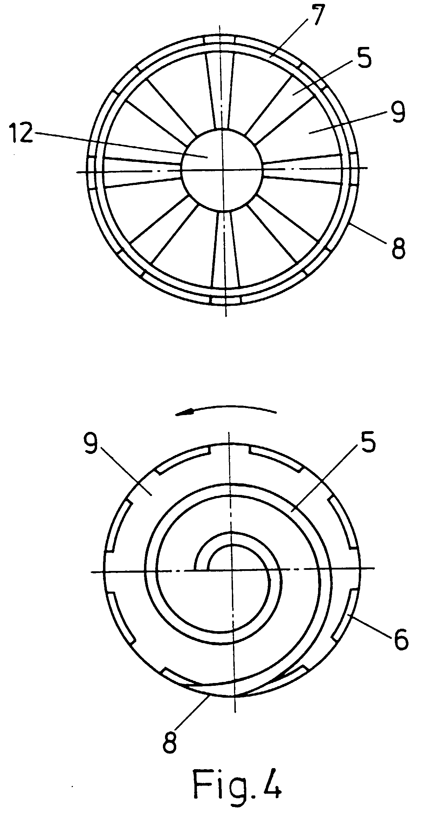

Die in Fig. 1 dargestellte Zerkleinerungs- und Zuteilungsvorrichtung besteht aus einem feststehenden (1) und einem um eine Achse drehbaren Teil (2). Der von der Fördervorrichtung, z.B. einer Dickstoffpumpe geförderte und von großen Fremdkörpern befreite Schlamm tritt an der Eintrittsöffnung (3) in die Zerkleinerungs- und Zuteilungsvorrichtung ein. Die Eintrittsöffnung (3) weist einen Stutzen auf und kann über eine in Fig. 1 nicht dargestellte Flanschverbindung oder Verschraubung mit der in Fig. 1 ebenfalls nicht dargestellten Druckleitung zwischen Fördervorrichtung und Zerkleinerungs- und Zuteilungsvorrichtung verbunden werden. Innerhalb der Zerkleinerungs- und Zuteilungsvorrichtung wird der Klärschlamm durch den Spalt (4) zwischen dem feststehenden (1) und dem drehbaren (2) Teil der Zerkleinerungs- und Zuteilungsvorrichtung hindurchgepreßt. In den, diesem Spalt zugewandten, Flächen des feststehenden und des beweglichen Teiles sind von innen nach außen führende Vertiefungen (5) ausgebildet. Die Breite dieser Vertiefungen kann, wie in Fig. 3 und dem oberen Teil der Fig. 4 dargestellt von innen nach außen zunehmen.

Die Form der Vertiefungen kann dabei so gewählt werden, daß an den Überkreuzungen von Rändern der Vertiefungen im feststehenden und im drehbaren Teil von diesen Rändern annähernd rechte Winkel gebildet werden. Durch eine derartige Formgebung wird erreicht, daß die Schlammstränge bereits im Innern der Zerkleinerungs- und Zuteilungsvorrichtung in Bereiche mit größerem und mit kleinerem Querschnitt aufgeteilt werden, wobei die Bereiche mit größerem Querschnitt bei Drehung des beweglichen Teiles im gekennzeichneten Drehsinn entlang der Vertiefungen im feststehenden Teil in Richtung der Austrittsöffnungen geschoben werden. Bei einer derartigen Konstruktion werden größere Fremdkörper in den Bereichen mit größerem Querschnitt konzentriert. Eine derartige Unterteilung der Schlammstränge in Bereiche mit unterschiedlichen Querschnitten ist auch dann gegeben. wenn sich die Vertiefungen nicht unter einem rechten Winkel kreuzen. In den Fig. 3 und 4 sind verschiedene Formen der Vertiefungen dargestellt.

Durch die Austrittsöffnungen (8) werden daher Schlammstränge geschoben, die in regelmäßigen Abständen Bereiche mit größerem und Bereiche mit kleinerem Querschnitt aufweisen. Sowohl der feststehende als auch der drehbare Teil sind am Rand in Verlängerung der Stege (9) zwischen den Vertiefungen (5) mit Zähnen (6) besetzt, durch die die austretenden Schlammstränge in den Bereichen mit kleinerem Querschnitt durchtrennt werden. Auf diese Weise werden gleich große Schlammpartikel erzeugt. Da größere harte Fremdkörper in den Bereichen mit größerem Querschnitt konzentriert sind, sind die Zähne (6) vor Beschädigungen durch harte Fremdkörper weitgehend geschützt. Die Gefahr einer derartigen Beschädigung kann noch weiter reduziert werden, wenn die Breite der Zähne (6) etwas geringer ist als die Breite der Stege (9) und wenn in Zähne auf den Stegen um eine kleine Strecke nach hinten zurückgesetzt sind. Wird die Vorderkante der Zähne (6) schräg ausgeführt, so daß die dem Spalt (4) zugewandte Oberkante der Zähne (6) kleiner ist als die mit dem feststehenden bzw. drehbaren Teil verbundene Basis, dann können von den Zähnen nicht durchtrennte Fremdkörper, z.B. Haare zur Oberkante und über die Zähne hinweggleiten. Dadurch wird sichergestellt, daß sich Bestandteile des Schlammes nicht in einer die Funktion der Vorrichtung behindernden Weise an den Zähnen festsetzen können. In Fig. 3 ist der Durchmesser des drehbaren Teiles (untere Hälfte der Fig. 3) etwas größer als der Durchmesser des feststehenden Teiles (obere Hälfte der Fig. 3) und entlang des Randes mit einer Nut (7) versehen, in die die Zähne des feststehenden Teiles eingreifen. Es ist auch möglich, wie in Fig. 4 dargestellt, den Durchmesser des feststehenden Teiles (obere Hälfte der Fig. 4) größer auszuführen als den Durchmesser des drehbaren Teiles (untere Hälfte der Fig. 4) und den feststehenden Teil (2) entlang des Randes mit einer kreisförmigen Nut zu versehen, in die die Zähne (6) des drehbaren Teiles eingreifen. Zur Erhöhung der Schneidwirkung können die Vorderkanten der Zähne angeschliffen sein. Eine Nut (7) ist nicht unbedingt erforderlich, sie erleichtert jedoch die Zentrierung des feststehenden und des beweglichen Teiles, d.h. die Rotationsachse (10) des beweglichen Teiles (2) ist gleichzeitig Symmetrieachse des unteren Teiles des feststehenden Teiles (1).

Bei Stoffen, die zum Verkleben und Verklumpen neigen, ist es von Vorteil, wie in den Fig. 3 und 4 dargestellt, die Breite der Stege (9) größer auszuführen als die Breite der Vertiefungen (5), so daß auch die Breite der auf den Rand der Stege (9) sitzenden Zähne (6) größer sein kann als die Breite der Austrittsöffnungen (8). Sind nämlich die Zähne (6) breiter als die Austrittsöffnungen (8), so vergeht eine gewisse Zeit nach Abtrennung der Schlammpartikel bis die Schlammstränge wieder aus den Austrittsöffnungen (8) austreten können. Dadurch wird die Gefahr reduziert, daß nacheinander abgetrennte Schlammpartikel miteinander verkleben und verklumpen.

Eine Aufteilung des Schlammes im Innern der Zerkleinerungs- und Zuteilungsvorrichtung in Bereiche mit größeren und kleineren Querschnitten ist auf verschiedene Weisen möglich. Bei dem in Fig. 4 dargestellten Beispiel verlaufen die Vertiefungen (5) im feststehenden, in der oberen Hälfte der Fig. 4 dargestellten Teil radial nach außen, während der drehbare , in der unteren Hälfte der Fig. 4 dargestellte Teil, eine oder mehrere spiralförmige Vertiefungen enthält, die die Vertiefungen im feststehenden Teil unter einem annähernd rechten Winkel kreuzen. Wie bei der in Fig. 3 dargestellten Variante der erfindungsgemäßen Vorrichtung werden auch bei der in Fig. 4 dargestellten Variante bei Drehung des drehbaren Teiles die Schlammstrangbereiche mit größerem und mit kleinerem Querschnitt entlang den Vertiefungen im feststehenden und im drehbaren Teil zu den Austrittsöffnungen geschoben.

Bei der in Fig. 3 dargestellten Variante sind die Vertiefungen im feststehenden und im beweglichen Teil gleich lang und die Anzahl der Vertiefungen ist in beiden Teilen gleich groß. Bei der in Fig. 4 dargestellten Variante weisen dagegen die Vertiefungen im feststehenden Teil direkt nach außen, d.h. sie sind so kurz wie möglich, während der Weg von innen nach außen durch die spiralförmige Vertiefung im beweglichen Teil viel länger ist. Durch eine derartige Anordnung kann berücksichtigt werden, daß der Transport des Schlammes nach außen in den Vertiefungen des drehbaren Teiles durch die Fliehkraft unterstützt wird. Eine weitere Möglichkeit, die Vertiefungen im feststehenden Teil so kurz wie möglich auszuführen und damit den Reibungswiderstand und die Gefahr einer Verstopfung zu reduzieren, ist durch eine Vergrößerung der zentralen Öffnung (12) realisierbar.

Die Mittellinien der Vertiefungen im feststehenden und im beweglichen Teil müssen sich nicht, wie bei der in Fig. 4 dargestellten Variante, unter einem Winkel von annähernd 90° kreuzen, sondern können sich auch, wie in Fig. 3 dargestellt, unter einem erheblich kleineren Winkel kreuzen. Auch bei anderen Kreuzungswinkeln als 90° werden die Schlammstränge in Bereiche mit größerem und in Bereiche mit kleinerem Querschnitt unterteilt, wobei diese Bereiche bei Drehung des drehbaren Teiles in den in den Fig. 3 und 4 gekennzeichneten Richtungen nach außen geschoben werden. Wenn sich die Vertiefungen unter einem Winkel von 90° kreuzen. dann werden die Bereiche mit größerem und kleineren Querschnitt parallel zur Mittellinie der Vertiefungen (5) nach außen gefördert. Bei einer Abweichung des Kreuzungswinkels um einen bestimmten Betrag x, d.h. bei einem Kreuzungswinkel von 90°-x werden die Schlammbereiche mit größerem und kleinerem Querschnitt nicht mehr parallel sondern unter dem Winkel x zur Mittellinie der Vertiefungen (5) nach außen gefördert. Dadurch erhöht sich zwar der Reibungswiderstand, andererseits kann bei einem Verzicht auf einen Kreuzungswinkel von annähernd 90° eine größere Anzahl von Vertiefungen im drehbaren und im feststehenden Teil eingearbeitet werden.

Bei der in Fig. 1 dargestellten Vorrichtung verläßt der Schlamm die Zerkleinerungs- und Zuteilvorrichtung in einer senkrecht zur Drehachse (10) stehenden Ebene. Es sind auch andere Austrittswinkel möglich. In Fig. 2 ist z.B. eine Ausführungsform der erfindungsgemäßen Vorrichtung schematisch dargestellt, bei der der Klärschlamm die Vorrichtung entlang eines Kegelmantels unter einem Winkel von 30° zur Drehachse (10) verläßt. Durch Variation des Austrittswinkels kann das Gebiet, in das die zerkleinerten Schlammstücke gefördert werden, variiert und den Bedürfnissen des jeweiligen Anwendungsfalles angepaßt werden.

In Fig. 1 und 2 sind bevorzugte Ausführungsformen der erfindungsgemäßen Vorrichtung dargestellt. Weitere Varianten sind möglich. Z.B. ist es nicht erforderlich, die Antriebswelle durch die Zuleitung für die Schlammzuführung zu führen; der drehbare Teil könnte auch von unten angetrieben werden.

Außerdem ist es möglich, beide den Spalt (4) bildenden Teile in Rotation zu versetzen oder den in den Fig. 1 und 2 drehbar dargestellten Teil zu fixieren und statt dessen den in den Fig. 1 und 2 feststehend dargestellten Teil in Rotation zu versetzen. In diesen Fällen darf die Zuleitung für die Schlammzuführung mit beiden, den Spalt (4) bildenden Teilen, nicht starr bzw. nur mit dem jeweils feststehenden Teil starr verbunden sein.

Durch Veränderung der Drehzahl der Schlammfördereinrichtung, z.B. einer Dickstoffpumpe, kann der durch die Zerkleinerungs- und Zerteilungsvorrichtung geförderte Schlammstrom variiert werden. Durch Veränderung der Drehzahl des drehbaren Teiles der Zerkleinerungs- und Zuteilungsvorrichtung kann die Größe der erzeugten Schlammpartikel variiert werden. Je größer die Drehzahl der Dickstoffpumpe und je kleiner die Drehzahl des drehbaren Teiles sind, um so größere Schlammpartikel werden erzeugt.

Falls Stoffe zerkleinert und zugeteilt werden sollen, die geringere Ansprüche an Zerkleinerungs- und Zuteilungsvorrichtungen stellen als mechanisch entwässerter Klärschlamm, oder falls keine Zerkleinerung in gleich große Stücke verlangt wird, können vereinfachte Varianten der erfindungsgemäßen Vorrichtung eingesetzt werden. Verzichtet man z.B. entweder auf die Zähne am Rand des feststehenden Teiles (1) oder auf die Zähne am Rand des drehbaren Teiles (2), dann treten aus den Austrittsöffnungen Schlammstränge mit periodisch wechselndem Querschnitt aus, die nicht mehr durch die noch vorhandenen Zähne in kleine Stücke zerteilt werden. Die Bereiche des Schlammstranges mit kleinerem Querschnitt bilden Sollbruchstellen, an denen der Schlammstrang bei entsprechender Konsistenz z.B. aufgrund des eigenen Gewichts auseinander brechen kann.

Verzichtet man im feststehenden Teil auf Vertiefungen und bildet den drehbaren Teil ohne Zähne aus oder verzichtet man umgekehrt auf Vertiefungen im drehbaren Teil und bildet den feststehenden Teil ohne Zähne aus, dann treten aus den Austrittsöffnungen Stränge mit gleichbleibendem Querschnitt aus, die von den Zähnen in gleich große Stücke zerteilt werden, wobei die Größe der erzeugten Stücke durch Veränderung der Drehzahl des drehbaren Teiles variiert werden kann. Eine Veränderung der Stückgröße ist außerdem durch Variation der Drehzahl der Dickstoffpumpe möglich.

Die Erzeugung gleich großer Schlammpartikel wird in einer Reihe verschiedener Anwendungsfälle verlangt, z.B. wenn der getrocknete Schlamm verbrannt oder als Düngemittel ausgebracht werden soll. Bereits bei der Trocknung ist die Zerkleinerung in gleich große Stücke meist von Vorteil, da bei fast allen Trocknungsverfahren größere Stücke längere Trocknungszeiten erfordern. In Anwendungsfällen, in denen der getrocknete Schlamm vermahlen wird, z.B. um ihn als Zuschlagstoff zu nutzen, ist die Erzeugung gleich großer Partikel dagegen von geringer Bedeutung.

Durch die Bewegung des drehbaren Teiles gegen den feststehenden Teil und durch die Ausbildung von Schlammbereichen mit größeren und kleineren Querschnitten wird ein Verstopfen der Zerkleinerungs- und Zuteilungsvorrichtung wirksam verhindert und die Gefahr von Beschädigungen der Zähne (6) durch im Schlamm enthaltene Fremdkörper reduziert.

Form und Größe der Bereiche mit größerem und kleinerem Querschnitt können durch Veränderung der Form der Vertiefungen unterschiedlichen Bedürfnissen angepaßt werden. Durch Veränderung des Verhältnisses der Breite der Stege zwischen den Vertiefungen und der Breite der Austrittsöffnungen kann ferner das Verhältnis der Länge der Abschnitte mit größerem und kleinerem Querschnitt der aus den Austrittsöffnungen austretenden Schlammstränge variiert werden.

Trotz aller Vorsichtsmaßnahmen muß damit gerechnet werden, daß aufgrund von Störungen oder Fehlern Verstopfungen auftreten oder zu große, harte Fremdkörper in die Zerkleinerungs- und Zuteilungsvorrichtung gelangen. Um in diesen Fällen Betriebsausfälle zu vermeiden und Beschädigungen der erfindungsgemäßen Vorrichtung zu verhindern, kann der bewegliche Teil, wie in Fig. 1 dargestellt, z.B. durch eine Feder (11) in seiner normalen Position gehalten werden. Verstopfungen treten meist im Bereich der engsten Stellen, d.h. im Spalt zwischen dem drehbaren und dem feststehenden Teil auf. Im Falle einer solchen Verstopfung steigt der Druck auf den drehbaren Teil, die Feder (11) wird zusammengedrückt, der drehbare Teil verschiebt sich entlang der Drehachse (10) und der Spalt weitet sich. Dadurch wird die Verstopfung beseitigt und zu große Fremdkörper können aus der erfindungsgemäßen Vorrichtung entfernt werden, ohne daß Betriebsunterbrechungen oder Beschädigungen in Kauf genommen werden müssen.

## Patentansprüche

1. Zerkleinerungs- und Zuteilungsvorrichtung für zerstückelbare, pumpbare Stoffe, insbesondere für mechanisch entwässerten Klärschlamm, dadurch gekennzeichnet, daß die zu zerkleinernden Stoffe durch einen aus zwei Teilen der Vorrichtung gebildeten Spalt (4) nach außen gefördert werden, wobei zumindest ein Teil der beiden den Spalt (4) bildenden Teile drehbar ist und wobei in der dem Spalt (4) zugewandten Oberfläche zumindest eines Teiles der beiden der Spalt (4) bildenden Teile mindestens eine Vertiefung (5) angebracht ist, die ausgehend von einem Bereich in der Nähe der Drehachse (10) bis zum Rand des die Vertiefung enthaltenden Teiles führt.

2. Vorrichtungen nach Anspruch 1, dadurch gekennzeichnet, daß die Drehachse des drehbaren Teiles senkrecht auf der durch den Spalt (4) definierten Ebene steht.

3. Vorrichtung nach Anspruch 1, dadurch gekennzeichnet, daß der Spalt (4) zwischen den beiden den Spalt (4) bildenden Teilen der Mantelfläche eines Kegelstumpfes entspricht.

4. Vorrichtung nach mindestens einem der vorhergehenden Ansprüchen, dadurch gekennzeichnet, daß der Querschnitt mindestens einer der Vertiefungen von innen nach außen stetig zunimmt.

5. Vorrichtung nach mindestens einem der vorhergehenden Ansprüche, dadurch gekennzeichnet, daß beide den Spalt (4) bildenden Teile Vertiefungen enthalten, deren Mittellinien sich bei jedem Drehwinkel annähernd unter einem Winkel von 90° kreuzen.

6. Vorrichtung nach mindestens einem der vorhergehenden Ansprüche, dadurch gekennzeichnet, daß einer der beiden den Spalt (4) bildenden Teile nicht drehbar und starr mit der Zuleitung für die Schlammzuführung verbunden ist.

7. Vorrichtung nach mindestens einem der vorhergehenden Ansprüche, dadurch gekennzeichnet, daß der Rand eines der beiden den Spalt (4) bildenden Teile über den Rand des anderen Teiles herausragt und daß mindestens ein Teil der beiden den Spalt (4) bildenden Teile am Rand mit Zähnen (6) versehen ist, die dem Spalt (4) zugewandt sind.

8. Vorrichtung nach Anspruch 7, dadurch gekennzeichnet, daß beide den Spalt (4) bildenden Teile am Rand mit Zähnen versehen sind, durch die bei der Drehung des drehbaren Teiles bzw. bei Drehung der beiden den Spalt (4) bildenden Teile gegeneinander die Austrittsöffnungen (8) in zeitlicher Folge vollständig überdeckt und vollständig freigegeben werden.

9. Vorrichtung nach Anspruch 8, dadurch gekennzeichnet, daß die Breite der Stege (9) und die Breite der Zähne (6) am Außenrand dieser Stege (9) größer ist, als die Breite der Austrittsöffnungen (8) in beiden den Spalt (4) bildenden Teilen.

10. Vorrichtung nach mindestens einem der vorhergehenden Ansprüche, dadurch gekennzeichnet, daß bei Steigerung des Druckes zwischen den beiden den Spalt (4) bildenden Teilen über einen vorgegebenen Wert hinaus ein Teil in Richtung der Drehachse (10) derart verschoben wird, daß sich die Breite des Spaltes (4) vergrößert.
